# EUROPEAN PATENT APPLICATION

(11) **EP 1 783 420 A2**
(43) Date of publication of application: **09.05.2007**
(21) Application number: 06022865.7
(22) Date of filing: 02.11.2006
(51) Int. Cl.: F16M 13/02

(54) **In-wall display device**

(30) Priority: 02.11.2005 KR 20050104119; 23.01.2006 KR 20060006711
(71) Applicant: Costel Co., Ltd., Gyeonggi-do (KR)
(72) Inventor: Ryu, Gong-hyun, Seongnam-si Gyeonggi-do (KR)
(74) Representative: Grünecker, Kinkeldey, Stockmair & Schwanhäusser Anwaltssozietät

(57) **Abstract**

An in-wall display device is provided, including: a receiving unit (131) to receive the in-wall display device; a display unit (170) which is deposited in and drawn out from the receiving unit (131); a hinge assembly including a plurality of hinge units which is fixed to the receiving unit (131) and the display unit (170) to deposit and draw out the display unit (170) and adjust viewing direction of the display unit (170); driving units to rotate the hinge units; and a controller including a driving control unit to control the driving units based on driving instructions.

## Description

### CROSS REFERENCE TO RELATED APPLICATION

This application claims the benefit of and priority to Korean Patent Application Nos. 2005-104119, filed on November 2, 2005, and 2006-006711, filed on January 23, 2006, which are hereby incorporated by reference for all purposes as if fully set forth herein.

### BACKGROUND OF THE INVENTION

### FIELD OF THE INVENTION

The present invention relates to in-wall display devices that can be deposited in and drawn out from walls of houses and the like.

### DISCUSSION OF THE BACKGROUND

With rapid development of industry, houses are not considered simply as a residential area any more. For example, a television set is mounted on a wall of a kitchen or bathroom so that people can view television programs during meal and bath times.

Conventional in-wall display devices can be deposited in and drawn out from walls and provided so that users can view the display devices at desired positions. However, the users should manually draw out the display devices from walls, change the viewing directions of display units of the display devices, and deposit the display devices in the walls.

On the other hand, when the television sets are installed in humid areas such as kitchen or bathroom, electric circuit units constituting the television sets may be damaged due to water penetrating into the television sets.

### SUMMARY OF THE INVENTION

The present invention provides an in-wall display device which can be automatically deposited in and drawn out from walls and can automatically control its directions.

The present invention further provides an in-wall display device which is water-resistant in humid areas and occupies a minimum space to be installed in.

Additional features of the invention will be set forth in the description which follows, and in part will be apparent from the description, or may be learned by practice of the invention.

The present invention discloses an in-wall display device including: a receiving unit to receive the in-wall display device; a display unit which is deposited in and drawn out from the receiving unit; a hinge assembly including a plurality of hinge units which is fixed to the receiving unit and the display unit to deposit and draw out the display unit and adjust viewing direction of the display unit; driving units to rotate the hinge units; and a controller including a driving control unit to control the driving units based on driving instructions.

The present invention also discloses an in-wall display device including: a fixed case which is fixed in a recess of a wall in a house and has an opening formed on a front side of the fixed case; a main body which is provided in the fixed case, and has a receiving unit formed on a front side of the main body and a controller controlling the entire system; a display unit which is electrically connected through a connection cable to the main body to display images; a horizontal adjustment unit which is fixed to the fixed case and the main body between the fixed case and main body, and is adjusted so that the display unit can be kept horizontal; a hinge assembly which is used to deposit and draw out the display unit and adjust viewing direction of the display unit, and includes a first bracket which is fixed to a rear side of the display unit, a second bracket which is fixed to a front side of the receiving unit, a first rotating unit which is hinge-coupled to the first bracket, and a second rotating unit which is hinge-coupled to the first rotating unit at an end, is hinge-coupled to the second bracket at the other end, and has a recess to receive the first rotating unit when the display unit is deposited in the receiving unit; driving units to rotate hinge-coupled parts of the hinge assembly; and a controller including a driving control unit to control the driving units based on driving instructions.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is an exploded perspective view of an in-wall display device according to an exemplary embodiment of the present invention.
FIG. 2 is a partial cross-sectional view of the in-wall display device shown in FIG. 1.
FIG. 3 is a front view for explaining operation of coupling a horizontal adjustment unit to a fixed case shown in FIG. 2.
FIGS. 4 and 5 are partial cross-sectional views showing a display unit which is drawn out from a wall in FIG. 2.
FIG. 6 is an exploded perspective view of a hinge assembly shown in FIG. 1.
FIG. 7 is a plan view of a driving unit in the hinge assembly shown in FIG. 6.
FIGS. 8 and 9 are perspective views of the driving unit shown in FIG. 7.

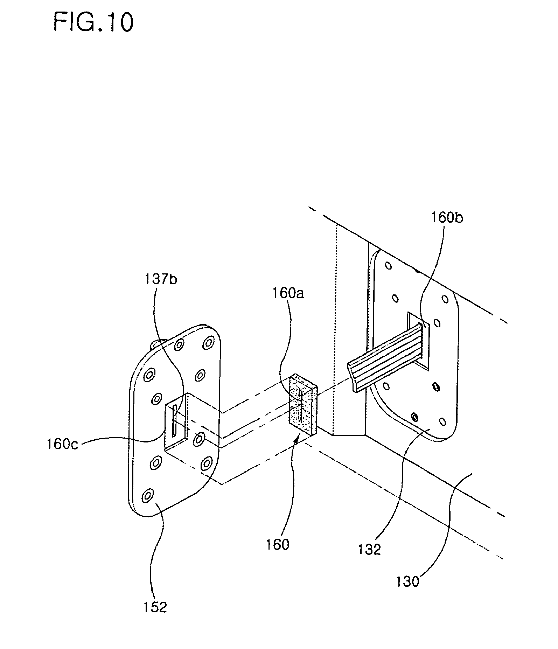

FIG. 10 is a partial perspective view showing a waterproof structure between a main body and a second bracket shown in FIG. 6.
FIG. 11 is a block diagram for explaining operation of an in-wall display device according to an exemplary embodiment of the present invention.
FIG. 12 is a block diagram of a main body and display unit of an in-wall display device according to an exemplary embodiment of the invention.
FIG. 13 is a block diagram of a main body and display unit of an in-wall display device according to an exemplary embodiment of the invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

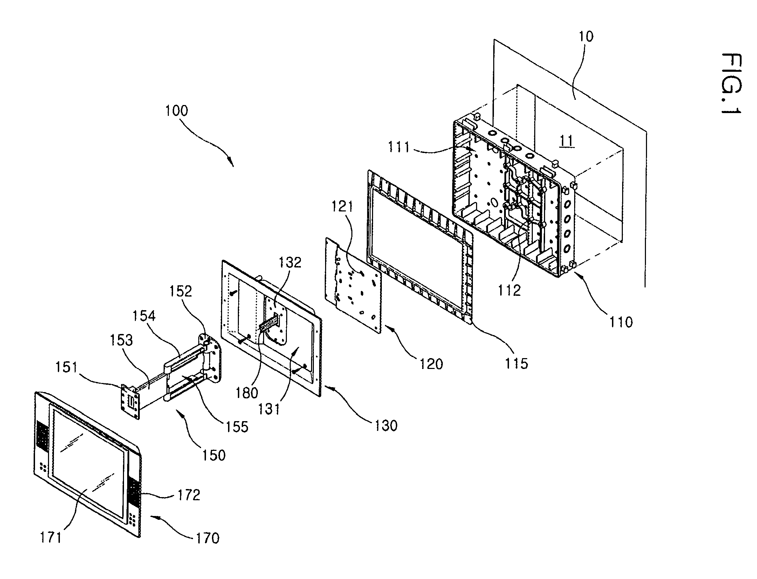

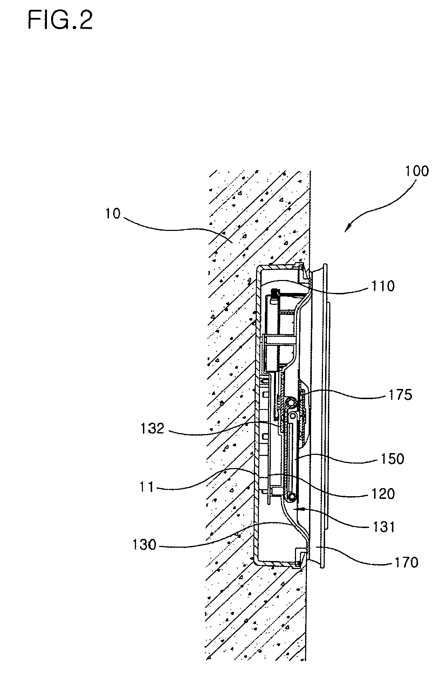

FIG. 1 is an exploded perspective view of an in-wall display device according to an exemplary embodiment of the present invention. FIG. 2 is a partial cross-sectional view of the in-wall display device shown in FIG. 1.

The in-wall display device includes a fixed case 110, a main body 130 including a receiving unit 131 in the fixed case 110, and a display unit 170 coupled by a hinge assembly 150 to the receiving unit 131 of the main body 130. The in-wall display device may further include a horizontal adjustment unit 120 that is provided between the main body 130 and the fixed case 110 and coupled to the main body 130 and the fixed case 110.

The fixed case 110 includes an opening 111 and an inner space so that the main body 130 can be deposited in. The fixed case 110 is provided on a wall 10 of a room, such as kitchen or bathroom. For this purpose, a recess 11 having a size corresponding to that of the fixed case 110 is formed on the wall 10. The fixed case 110 is deposited and fixed in the recess 11. The fixed case 110 may be fixed to the recess 11 with cement or the like. A lattice-like recess (not shown) may be formed on the rear surface of the fixed case 110 so that the fixed case 110 can be more securely fixed to the recess 11. A supporting frame 115 is stably fixed to the fixed case 110 to support the edge of the main body 130.

The main body 130 is equipped with a controller 200 to control the entire system, and includes the receiving unit 131 to receive the display unit 170. The display unit 170 includes a panel 171 to display images. The display unit 170 further includes speakers 172 on both sides of the panel 171. The display unit 170 is electrically coupled to the main body 130 with a connection cable 180. The display unit 170 displays image signals transmitted from the main body 130 and outputs audio signals through the speakers 172.

The display unit 170 may further include a key input unit. For example, when the main body 130 is positioned inside the in-wall display device such that at least part of the in-wall display device is not exposed, the display unit 170 may further include a key input unit. When a remote control is used, the display unit 170 may further include an infrared-receiving unit to receive signals of the remote control.

The hinge assembly 150 is mechanically coupled to the main body 130 and the display unit 170 so that the display unit 170 can be deposited in and drawn out from the receiving unit 131 of the main body 130 and can be controlled in direction. The hinge assembly 150 includes a first bracket 151, which is fixed to the rear side of the display unit 170, a second bracket 152, which is fixed to the front side of the receiving unit 131, a first rotating unit 153, which is hinge-coupled to the first bracket 151, and a second rotating unit 154, which is hinge-coupled to the first rotating unit 153 and the second bracket 152 and has a recess 155 to receive the first rotating unit 153 when the display unit 170 is deposited in the receiving unit 131.

The display unit 170 is mechanically coupled to the main body 130 with the hinge assembly 150. For this purpose, screw connection holes are formed on the rear side of the display unit 170 to be coupled with the first bracket 151 of the hinge assembly 150, and a first connection unit 175 is provided so that the first bracket 151 can be inserted. In addition, screw connection holes are formed in the receiving unit 131 of the main body 130 to be coupled with the second bracket 152 of the hinge assembly 150, and a second connection unit 132 is provided so that the second bracket 152 can be inserted. It is preferable that screws fastened to the second bracket 152 are fastened to the second connection unit 132, and at least one of the screws is fastened to the horizontal adjustment unit 120 through the second connection unit 132. Hence, the display unit 170 can be prevented from sagging downwards due to its weight when it is drawn out from the receiving unit 131. The connection cable 180 is provided to pass through the first connection unit 175 of the display unit 170 and the second connection unit 132 of the main body 130.

The display unit 170 coupled by the hinge assembly 150 to the main body 130 is indirectly coupled to the fixed case 110. Thus, when the fixed case 110 is not exactly horizontally fixed on the wall 10, the display unit 170 also cannot be exactly horizontally provided. As a result, the display unit 170 may be inclined when viewed by users. This can be kept horizontal using the horizontal adjustment unit 120 that is provided between the fixed case 110 and the main body 130.

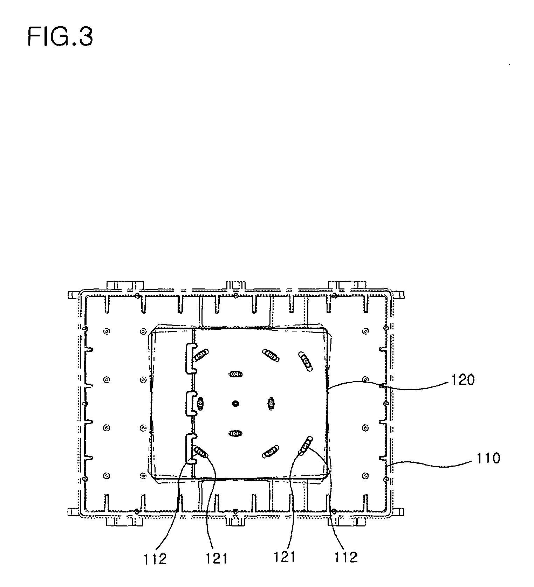

Referring to FIG. 3, the horizontal adjustment unit 120 is shaped in a plate shape and has a plurality of adjustment holes 121. Each of the adjustment holes 121 is shaped to correspond to a movement trajectory of the screw connection hole 112 which results from a relative rotation between the horizontal adjustment unit 120 and the fixed case 110. That is, the adjustment hole 121 is formed such that even though the horizontal adjustment unit 120 rotates about the fixed case 110 at predetermined angles, the screw connection hole 112 remains located in the adjustment hole 121 except that the adjustment hole 121 is located at the center of rotation of the horizontal adjustment unit 120, such that screws are fastened to both of the screw connection hole 112 and the adjustment hole 121. It is preferable that the adjustment hole 121 is formed so that the display unit 170 can be kept horizontal. Even though the fixed case 110 is not exactly horizontally provided in the wall 10, the display unit 170 can be kept horizontal by appropriately fixing the horizontal adjustment unit 120 to the fixed case 110.

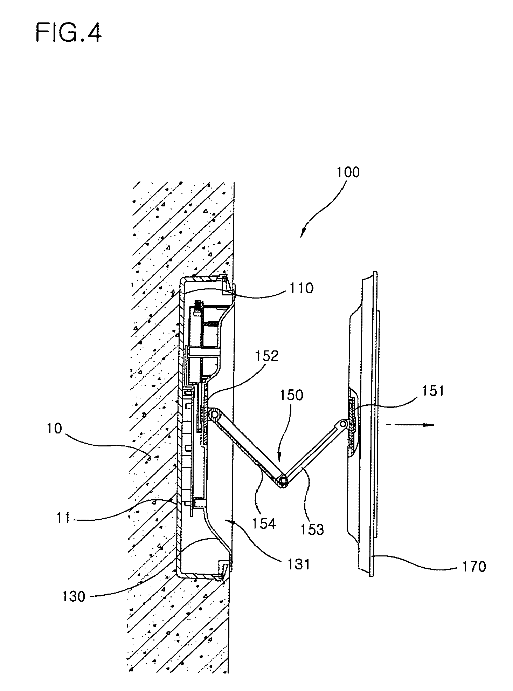

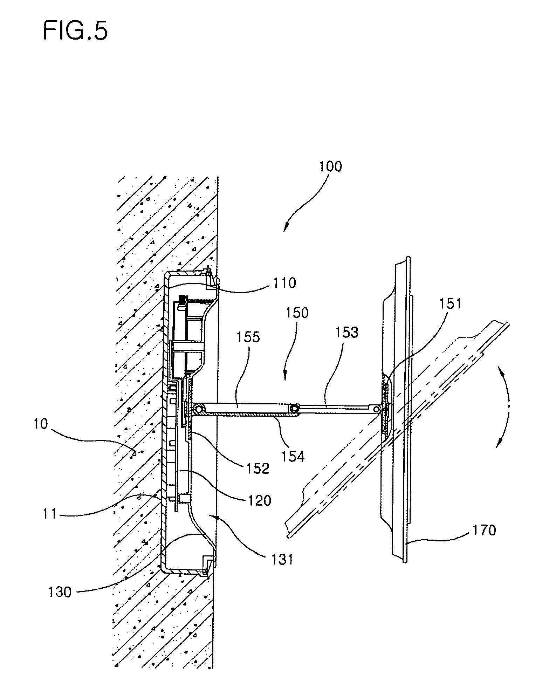

The display unit 170 is configured to be drawn out from the receiving unit 131 and to be adjusted in viewing angle as shown in FIGS. 4 and 5. For this purpose, the hinge assembly 150 includes the first rotating unit 153 which is hinge-coupled to the first bracket 151, and the second rotating unit 154 which is hinge-coupled to the first rotating unit 153 and second bracket 152. As shown in FIG. 2, it is preferable that the second rotating unit 154 has an opening 155 to receive the first rotating unit 153, such that the size of the receiving unit 131 of the main body 130 is reduced when the first and second rotating units 153 and 154 are folded up.

As shown in FIG. 5, the first bracket 151 and the first rotating unit 153 are hinge-coupled to each other so that the display unit 170 can be rotated about the first rotating unit 153 at an angle of up to 90° in left and right directions. As a result, users can view the display unit 170 at any positions. The first and second rotating units 153 and 154 are hinge-coupled to each other so that the first rotating unit 153 can be rotated at an angle of up to 180° with respect to the second rotating unit 154 as shown in FIG. 2. The second rotating unit 154 and the second bracket 152 are hinge-coupled to each other so that the second rotating unit 154 can be rotated from a position parallel to the front side of the receiving unit 131 of the main body 130 to a position perpendicular to the front side of the receiving unit 131 of the main body 130 as shown in FIG. 5. In addition, it is preferable that the first bracket 151 and the first rotating unit 153, the first rotating unit 153 and the second rotating unit 154, and the second rotating unit 154 and the second bracket 152 are respectively hinge-coupled to each other so that the first and second rotating units 153 and 154 can be rotated in a horizontal direction. Accordingly, the display unit 170 can be sufficiently supported even though it is drawn out from the receiving unit 131.

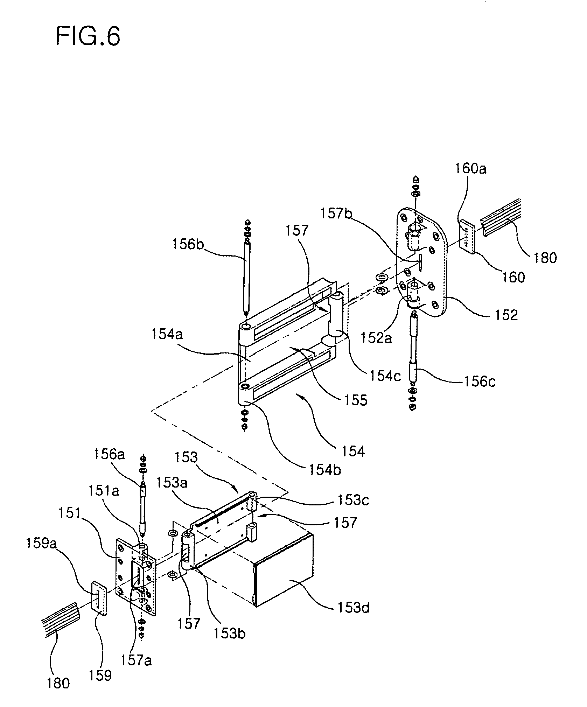

The structure of the hinge assembly 150 will be described in detail with reference to FIG. 6.

The first bracket 151 includes first shaft-supporting units 151a which are protruded to the first rotating unit 153 and are separated from each other. The first rotating unit 153 includes a second shaft-supporting unit 153b which is positioned at an end of a first base unit 153a adjacent to the first bracket 151 and is formed to be fit between the first shaft-supporting units 151a. A first rotating shaft 156a is provided in the first shaft-supporting units 151b and the second shaft-supporting unit 153b. That is, the first rotating shaft 156a is fit into the first shaft-supporting units 151b and the second shaft-supporting unit 153b. A washer and a nut are joined to a screw tap formed on both ends of the first rotating shaft 156a, such that the first bracket 151 and the first rotating unit 153 are hinge-coupled to each other.

The first rotating unit 153 includes a third shaft-supporting unit 153c formed on an end of the first base unit 153a adjacent to the second rotating unit 154. The second rotating unit 154 includes fourth shaft-supporting units 154b which are positioned at an end of a second base unit 154a adjacent to the first rotating unit 153 and are positioned on both sides of the third shaft-supporting unit 153c. The third and fourth shaft-supporting units 153c and 154b are formed such that the first rotating unit 153 is not rotated at an angle of more than 180° with respect to the second rotating unit 154. A second rotating shaft 156b is fit into the third and fourth shaft-supporting units 153c and 154b. A washer and a nut are joined to a screw tap formed on both ends of the second rotating shaft 156b, such that the first rotating unit 153 and the second rotating unit 154 are hinge-coupled to each other.

The second rotating unit 154 includes a fifth shaft-supporting unit 154c formed on an end of the second base unit 154a adjacent to the second bracket 152. The second bracket 152 includes sixth shaft-supporting units 152a which are positioned at an end of the second bracket 152 adjacent to the second rotating unit 154 and are positioned on both sides of the fifth shaft-supporting unit 154c. The fifth and sixth shaft-supporting units 154c and 152a are formed such that the second rotating unit 154 is not rotated at an angle of more than 90° with respect to the main body 130. A third rotating shaft 156c is fit into the fifth and sixth shaft-supporting units 154c and 152a. A washer and a nut are joined to a screw tap formed on both ends of the third rotating shaft 156c, such that the second rotating unit 154 and the second bracket 152 are hinge-coupled to each other.

The first bracket 151 includes a slit part 157a for allowing the connection cable 180 drawn out from the first connection unit 175 of the display unit 170 to pass through the first bracket 151. The second bracket 152 includes a slit part 157b for allowing the connection cable 180 drawn out from the second connection unit 132 of the main body 130 to pass through the second bracket 152. It is preferable that the connection cable 180 passing through the slit parts 157a and 157b passes through the hinge-coupled portions of the first and second rotating units 153 and 154 along the first and second rotating units 153 and 154. In addition, it is preferable that the hinge-coupled portions of the first and second rotating units 153 and 154, i.e., the second, third, and fifth shaft-supporting units 153b, 153c, and 154c, have recesses 158 at their central parts.

Each of the recesses 158 has a width larger than that of the connection cable 180. The recess 158 separates the connection cable 180 from the first and three rotating shafts 156a, 156b, and 156c so that the connection cable 180 can be smoothly moved. As a result, it is possible to prevent the connection cable 180 from being damaged by the first through three rotating shafts 156a, 156b, and 156c when the first and second rotating units 153 and 154 are rotated. The first rotating unit 153 may have a passage so that the connection cable 180 can pass through the first rotating unit 153. The passage is formed by joining the base unit 153a and a cover unit 153d to each other so that the connection cable 180 can pass through a space between the base unit 153a and the cover unit 153d. Similarly, even though not shown in the drawing, the second rotating unit 154 may have a passage so that the connection cable 180 can pass through the second rotating unit 154.

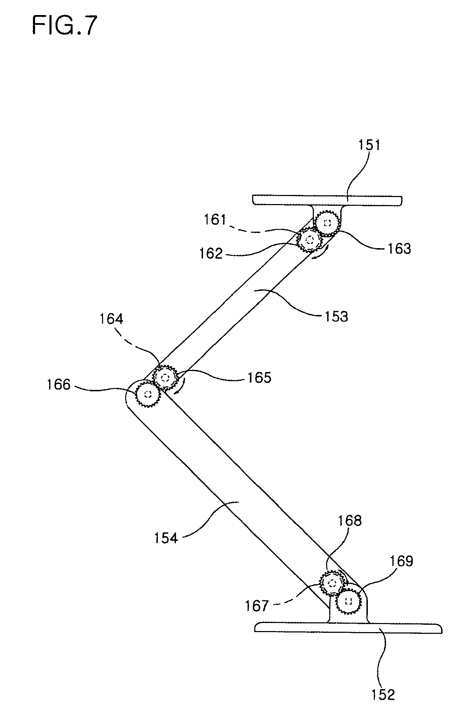

As shown in FIG. 7, a driving unit includes a plurality of motors and gears so that a plurality of hinge units of the hinge assembly 150 can be automatically rotated. The driving unit includes a first motor 161, a first fixed gear 163, a second motor 164, a second fixed gear 166, a third motor 167, and a third fixed gear 169.

The first motor 161 is provided on the first rotating unit 153 to be adjacent to the first bracket 151 and is shaft-coupled with a first driving gear 162. The first fixed gear 163 is provided at the center of rotation of the first bracket 151 and is engaged with the first driving gear 162. The second motor 164 is provided on the first rotating unit 153 to be adjacent to the second rotating unit 154 and is shaft-coupled with a second driving gear 165. The second fixed gear 166 is provided at the center of rotation of the second rotating unit 154 and is engaged with the second driving gear 165. The third motor 167 is provided on the second rotating unit 154 to be adjacent to the second bracket 152 and is shaft-coupled with a third driving gear 168. The third fixed gear 169 is provided at the center of rotation of the second bracket 152 and is engaged with the third driving gear 168.

As the first driving gear 162 engaged with the first fixed gear 163 is rotated by the first motor 161, the first rotating unit 153 is rotated with respect to the first bracket 151.

In addition, as the second driving gear 165 engaged with the second fixed gear 166 is rotated by the second motor 164, the first rotating unit 153 is rotated with respect to the second rotating unit 154.

In addition, as the third driving gear 168 engaged with the third fixed gear 169 is rotated by the third motor 167, the second rotating unit 154 is rotated with respect to the second bracket 152. The first to third motors 161, 164 and 167 are electrically connected to the main body 130 via the connection cable 180 and are driven by a control signal from a controller 200.

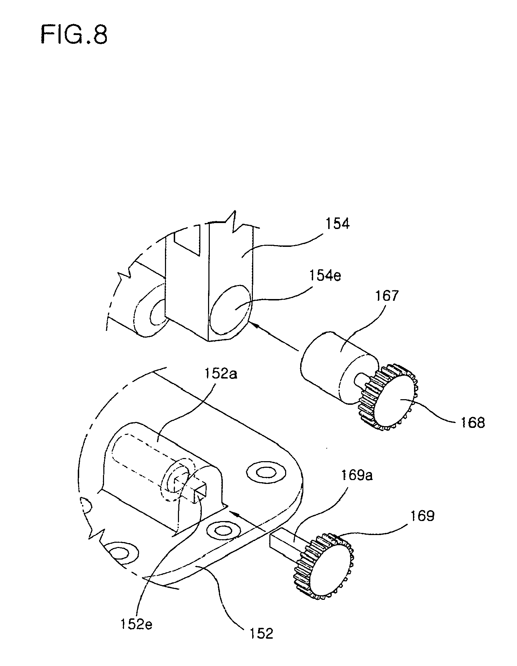

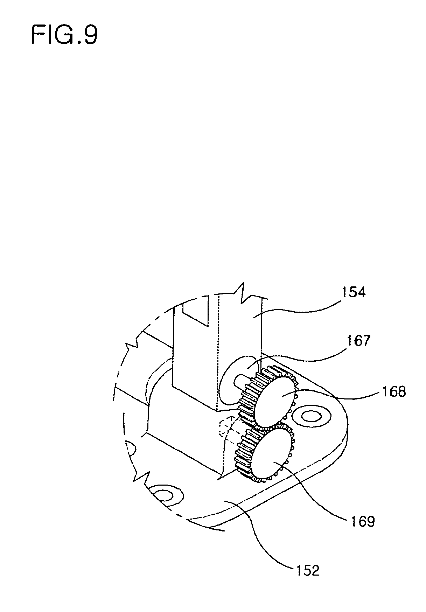

The structure of the driving unit will be described in detail with reference to FIGS. 8 and 9.

FIGS. 8 and 9 show the driving unit that is provided between the second rotating unit 154 and the second bracket 152.

A recess 154e is formed on the second rotating unit 154 to be adjacent to the second bracket 152. The third motor 167 is deposited in and fixed to the recess 154e. The third motor 167 may be fixed in the recess 154e by typical adhesives. A rotating shaft of the third motor 167 corresponds to the center of rotation of the third driving gear 168. A recess 152e is formed on the center of rotation of the second bracket 152. A fixing shaft 169a of the third fixed gear 169 is inserted and fixed in the recess 152e. The third fixed gear 169 and the third driving gear 168 are engaged with each other.

Driving units provided between the first bracket 151 and the first rotating unit 153 and between the first rotating unit 153 and the second rotating unit 154 may have the above-mentioned structure.

Since the connection cable 180 is provided to pass through the slit parts 137a and 137b of the first and second brackets 131 and 132, water may penetrate into the display unit 170 and the main body 130 through the slit parts 137a and 137b, causing damage to circuits. It becomes serious when the in-wall display device is installed in humid areas such as kitchen or bathroom. Thus, a first waterproof packing 159 is provided where the first bracket 131 is joined with the display unit 170, and a second waterproof packing 160 is provided where the second bracket 152 is joined with the main body 130. Holes 159a and 160a are formed on the first and second waterproof packing 159 and 160 so that the connection cable 180 can pass through the first and second waterproof packing 159 and 160. The first and second waterproof packing 159 and 160 are preferably made of rubber.

A waterproof structure between the main body 130 and the second bracket 152 will be described in detail with reference to FIG. 7. The second waterproof packing 160 is positioned between the second connection unit 132 of the main body 130 and the second bracket 152, and the connection cable 180 is drawn out from the second connection unit 132 of the main body 130 and passes through the slit part 137b of the second bracket 132 via the hole 160a of the second waterproof packing 160. Recesses 160b and 160c are formed on opposing surfaces between the second connection unit 132 and the second bracket 152 to insert the second waterproof packing 160. The recesses 160b and 160c are required in order that the second waterproof packing 160 may not float when tightly pressed. When the second waterproof packing 160 is interposed between the second connection unit 132 and the second bracket 152, and the second connection unit 132 and the second bracket 152 are fastened with screws, the second waterproof packing 160 is tightly pressed, thereby preventing water from penetrating through the slit part 157b of the second bracket 152. The waterproof structure between the main body 130 and the second bracket 152 also can be applied to prevent water from penetrating between the display unit 170 and the first bracket 151.

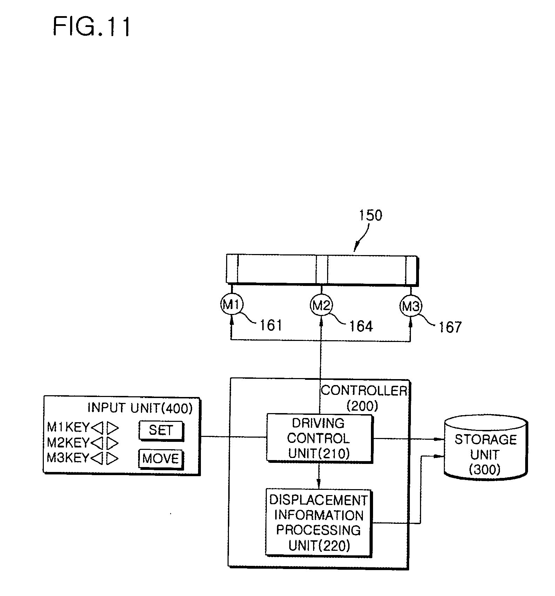

FIG. 11 is a block diagram for explaining the operation of an in-wall display device according to an exemplary embodiment of the invention. An input unit 400 is a typical key input unit and is provided either on the display unit 170 or on the main body 130. The input unit 400 includes a number of keys, such as M1 key, M2 key and M3 key, to deposit and draw out the display unit 170 and to control the direction of the display unit 170. Users can operate the M1, M2 and M3 keys to deposit and draw out the display unit 170 and to control the direction of the display unit 170.

A controller 200 may be a microprocessor to control the entire system. The controller 200 includes a driving control unit 210 to control the first, second and third motors 161, 164 and 167. The driving control unit 210 receives keys inputted from the input unit 400 and outputs a control signal through the connection cable 180 to drive the first, second and third motors 161, 164 and 167. The M1, M2 and M3 motors 161, 164 and 167 are driven by the control signal. When the motors are driven, gears are operated and hinge units are rotated. Accordingly, the user can operate the M1 key and M2 key on the display unit 170 which is embedded as shown in FIG. 2 to draw out the display unit 170 as shown in FIGS. 4 and 5. In addition, the user can operate the M3 key to control the direction of the display unit 170 as shown in FIG. 5.

Accordingly, it is possible to automatically drive a plurality hinge units to deposit and draw out the display unit and to control the direction of the display unit in the in-wall display device according to the embodiment of the invention.

The in-wall display device may further include a storage unit 300 to store displacement information. The controller 200 may further include a displacement information processing unit 220 to store the displacement information in the storage unit 300. The displacement information processing unit 220 stores displacement information of the motors 161, 164 and 167 that are controlled by the driving control unit 210.

The motors 161, 164 and 167 may be stepper motors. A stepper motor is an electromechanical device which converts electrical pulses into discrete mechanical movements. The shaft or spindle of a stepper motor rotates in discrete step increments when electrical command pulses are applied to it in the proper sequence. The stepper motor is a digital-controlled device, which moves a rotation angle corresponding to one step (approximately 1°) per digital pulse signal and continually moves in proportion to the number of input pulses and pulse input speed per unit time.

Since the total rotation angle of the stepper motor is proportional to the total number of input pulses, the displacement information processing unit 220 acquires displacement information of each of the motors 161, 164 and 167 that is controlled by the driving control unit 210. The displacement information may be either the total number of pulses transmitted to each of the motors or the rotation angle that is proportional to the pulses transmitted to each of the motors. The displacement information processing unit 220 acquires the displacement information from the driving control unit 210 and stores it in the storage unit 300. The displacement information processing unit 220 may acquire information of the rotation angle detected by an encoder and store it in the storage unit 300. A method of detecting the rotation angle of a motor by the encoder is well-known in the art, and will be omitted herein.

The driving control unit 210 refers to the displacement information stored in the storage unit 300 to output pulse signals corresponding to each of the motors 161, 164 and 167. Accordingly, the display unit 170 deposited in the receiving unit 131 is automatically drawn out, and the direction of the display unit 170 is automatically controlled.

A method of actually operating the in-wall display device will be described in detail.

A user operates the M1 and M2 keys to draw out the display unit 170 and operates the M3 key to control the viewing direction of the display unit 170. When the display unit 170 is adjusted to a predetermined position and direction, the user pushes a setup key of the input unit 400. The displacement information processing unit 220 acquires displacement information of each of the motors 161, 164 and 167 from the driving control unit 210 to store a current setup state of the display unit 170. The storage unit 300 stores the displacement information of each of the motors 161, 164 and 167. The user pushes a movement key without the need to operate the M1, M2 and M3 keys to draw out the display unit 170 from the receiving unit 131 and control the viewing direction of the display unit 170. When the movement key is pushed, the driving control unit 210 refers to the displacement information stored in the storage unit 300 to output pulse signals to each of the motors 161, 164 and 167. Accordingly, the display unit 170 is automatically controlled according to the setup information of the user.

Although not shown, the input unit 400 may further include a termination key to automatically deposit the display unit 170. When the user pushes the termination key, the driving control unit 210 refers to the displacement information stored in the storage unit 300 to output pulse signals to each of the motors 161, 164 and 167. Accordingly, the display unit 170 is automatically deposited in the receiving unit 131.

In the event the display unit 170 is drawn out by pushing the movement key, displacement information needs not to be stored since the displacement information is already known. In this case, the user pushes the termination key, the driving control unit 210 refers to the displacement information stored in the storage unit 300 and outputs pulse signals to each of the motors 161, 164 and 167 to automatically deposit the display unit 170 in the receiving unit 131.

While the display unit 170 and main body 130 are provided separately from each other in the above-mentioned embodiment, the controller 200 of the main body 130 and the display unit 170 may be unitarily formed. In this case, the main body 130 is used as the receiving unit 131.

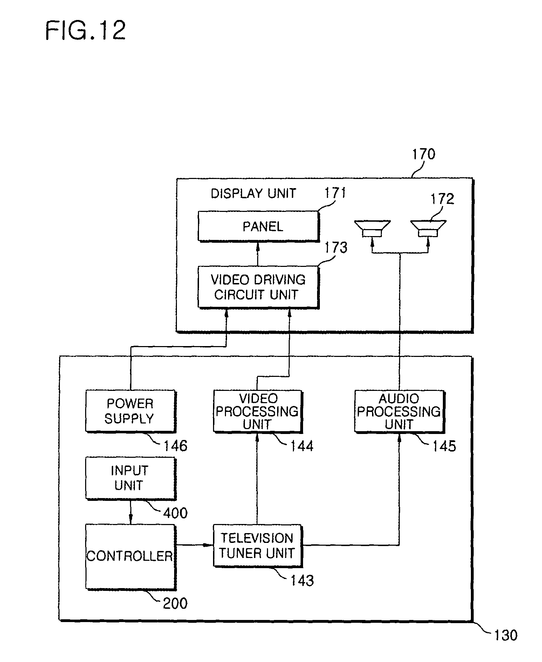

The main body 130 and the display unit 170 may be configured as shown in FIG. 12.

The main body 130 includes a controller 200, an input unit 400, a television receiving unit, and a power supply 146.

The controller 200 outputs control signals according to instructions to control the entire system.

The input unit 400 has a number of input buttons on the main body 130 to allow users to directly input instructions, or is embedded in the main body 130 to allow the users to use a remote control. The input unit 400 transmits the instructions to the controller 200.

The television receiving unit includes a television tuner unit 143, a video processing unit 144, and an audio output unit 145. The television tuner unit 143 selects a desired one from among broadcast signals received via an antenna, and outputs video and audio signals. The television tuner unit 143 may support at least one of NTSC (National Television Systems Committee) and PAL (Phase Alternation Line). Further, the television tuner unit 143 may support satellite DMB (Digital Multimedia Broadcasting).

The power supply 146 supplies power to drive the main body 130 and the display unit 170.

The display unit 170 includes a video driving circuit unit 173, a panel 171, and a speaker 172. The video driving circuit unit 173 receives video signals from the video processing unit 144 through the connection cable 180 and converts the video signals to video data. The panel 171 receives the video data from the video driving circuit unit 173 and displays images. The speaker 172 receives audio signals from the audio output unit 145 of the main body 130 and converts the audio signals to audible sound. When the display unit 170 is drawn out, the panel 171 and the speaker 172 are also drawn out, thus improving audio-visual effect. A flat display device, such as liquid crystal display, is preferably used as the panel 171.

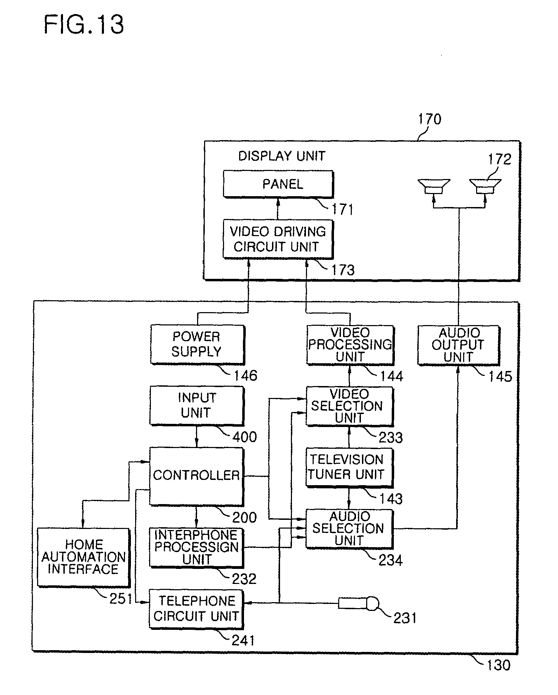

The main body 130 may be configured as shown in FIG. 13.

Referring to FIG. 13, in addition to the elements shown in FIG. 12, the main body 130 further includes a microphone 231, an interphone processing unit 232, a video selection unit 233, and an audio selection unit 234. The microphone 231 converts voice to electrical audio signals. The interphone processing unit 232 outputs video and audio signals from information about visitors received through an interphone on an entrance, and outputs audio signals outputted from the microphone 231 to the interphone. The video selection unit 233 outputs one of video signals outputted from the television tuner unit 143 and the interphone processing unit 232 to the video driving circuit unit 173. The audio selection unit 234 outputs one of audio signals outputted from the television tuner unit 143 and the interphone processing unit 232 to the audio output unit 145.

When a visitor pushes a button on an interphone, a user inputs a predetermined instruction on the input unit 400. The controller 200 receives the instruction and drives the interphone processing unit 232. The interphone processing unit 232 receives video and audio signals from the interphone, and outputs the video signal to the video selection unit 233 and outputs the audio signal to the audio selection unit 234. The video selection unit 233 is driven by the controller 200 and outputs the video signal outputted from the interphone processing unit 232 to the video driving circuit unit 173. The audio selection unit 234 is driven by the controller 200 and outputs the audio signal outputted from the interphone processing unit 232 to the audio output unit 145. The video driving circuit unit 173 displays the visitor on the panel 171 and the audio output unit 145 outputs voice of the visitor through the speaker 172, enabling the user to identify the visitor. When the user identifies the visitor and responses to the visitor through the microphone 231, the microphone 231 converts the voice to an audio signal and transmits the audio signal to the interphone processing unit 232. The interphone processing unit 232 processes the audio signal and outputs it through the interphone.

The main body 130 may further include a telephone circuit unit 241. The telephone circuit unit 241 receives ring and audio signals from a telephone line and outputs the signals to the audio selection unit 234, and transmits the audio signal outputted from the microphone 231 through the telephone line.

When a user receives a telephone call and inputs a predetermined instruction on the input unit 400, the controller 200 receives the instruction and drives the telephone circuit unit 241. The telephone circuit unit 241 transmits an audio signal transmitted through a telephone line to the audio selection unit 234. The controller 200 outputs a control signal to output the audio signal to the audio output unit 145. The audio output unit 145 outputs audible sound to the user through the speaker 172. In addition, the telephone circuit unit 241 transmits to the telephone line the audio signal of the user inputted through the microphone 231 so that the voice of the user can be transmitted.

The main body 130 may further include a home automation interface 251 that is connected to a computer controlling home automation and transmits/receives instructions of devices in houses. Techniques used in home automation include light and climate control, control of doors and window shutters, security and surveillance systems, the control of multi-media home entertainment systems, automatic plant watering and pet feeding, and automatic scenes for dinners and parties.

As apparent from the above description, the in-wall display device according to an exemplary embodiment of the invention can automatically drive a plurality of hinge units to deposit and draw out the display unit and control the viewing direction of the display unit.

In addition, the in-wall display device according to an exemplary embodiment of the invention can store displacement information of driving units to draw out the display unit and control the viewing direction of the display unit, and can drive the driving units based on the displacement information.

In addition, even though a fixed case is provided to be inclined, it is possible to adjust the display unit to be kept horizontal using a horizontal adjustment means.

In addition, it is possible to prevent water from penetrating into the display device in humid areas by providing waterproof packing between the main body and hinge assembly, and between the display unit and hinge assembly.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. An in-wall display device, comprising:
a receiving unit to receive the in-wall display device;
a display unit which is deposited in and drawn out from the receiving unit;
a hinge assembly including a plurality of hinge units which is fixed to the receiving unit and the display unit to deposit and draw out the display unit and adjust viewing direction of the display unit;
driving units to rotate the hinge units; and
a controller including a driving control unit to control the driving units based on driving instructions.

2. The in-wall display device of claim 1, wherein the hinge assembly comprises:
a first bracket which is fixed to a rear side of the display unit;
a second bracket which is fixed to a front side of the receiving unit;
a first rotating unit which is hinge-coupled to the first bracket; and
a second rotating unit which is hinge-coupled to the first rotating unit at an end, is hinge-coupled to the second bracket at the other end, and has a recess to receive the first rotating unit when the display unit is deposited in the receiving unit.

3. The in-wall display device of claim 2, wherein the driving unit comprises:
a first motor which is provided on the first rotating unit to be adjacent to the first bracket and is shaft-coupled with a first driving gear;
a first fixed gear which is provided at a center of rotation of the first bracket and is engaged with the first driving gear;
a second motor which is provided on the first rotating unit to be adjacent to the second rotating unit and is shaft-coupled with a second driving gear;
a second fixed gear which is provided at a center of rotation of the second rotating unit and is engaged with the second driving gear;
a third motor which is provided on the second rotating unit to be adjacent to the second bracket and is shaft-coupled with a third driving gear; and
a third fixed gear which is provided at a center of rotation of the second bracket and is engaged with the third driving gear.

4. The in-wall display device of any one of claims 1 to 3, further comprising a storage unit,
wherein the controller further comprises a displacement information processing unit to acquire displacement information of each of the driving units that is controlled by the driving control unit and to store the displacement information in the storage unit, and
wherein the driving control unit refers to the displacement information stored in the storage unit to control each of the driving units based on driving instructions.

5. The in-wall display device of claim 4, wherein the displacement information processing unit stores the displacement information of each of the driving units in the storage unit based on a user instruction.

6. An in-wall display device comprising:
a fixed case which is fixed in a recess of a wall in a house and has an opening formed on a front side of the fixed case;
a main body which is provided in the fixed case, and has a receiving unit formed on a front side of the main body and a controller controlling the entire system;
a display unit which is electrically connected through a connection cable to the main body to display images;
a horizontal adjustment unit which is fixed to the fixed case and the main body between the fixed case and main body, and is adjusted so that the display unit can be kept horizontal;
a hinge assembly which is used to deposit and draw out the display unit and adjust viewing direction of the display unit, and includes a first bracket which is fixed to a rear side of the display unit; a second bracket which is fixed to a front side of the receiving unit; a first rotating unit which is hinge-coupled to the first bracket; and a second rotating unit which is hinge-coupled to the first rotating unit at an end, is hinge-coupled to the second bracket at the other end, and has a recess to receive the first rotating unit when the display unit is deposited in the receiving unit;
driving units to rotate hinge-coupled parts of the hinge assembly; and
a controller including a driving control unit to control the driving units based on driving instructions.

7. The in-wall display device of claim 6, wherein the connection cable passes through a portion of the display unit corresponding to the first bracket and a portion of the receiving unit corresponding to the second bracket, and each of the first and second brackets has a slit so that the connection cable can pass through the first and second brackets.

8. The in-wall display device of claim 7, wherein the hinge-coupled parts of the first and second rotating units have recesses so that the connection cable can be smoothly moved when the connection cable passes through the hinge-coupled parts of the first and second rotating units.

9. The in-wall display device of claim 8, wherein the first rotating unit has a passage so that the connection cable can pass through the first rotating unit.

10. The in-wall display device of claim 7, wherein a first waterproof packing is interposed between the first bracket and the display unit to prevent water from penetrating into the display unit, and a second waterproof packing is interposed between the second bracket and the receiving unit to prevent water from penetrating into the receiving unit.

11. The in-wall display device of claim 6, wherein the second bracket is fixed to the receiving unit with a plurality of screws, and at lease one of the screws is fastened to the horizontal adjustment unit through the receiving unit.

12. The in-wall display device of claim 6, wherein the first and second rotating units of the hinge assembly are provided to be rotated in a horizontal direction.

13. The in-wall display device of claim 6,
wherein the fixed case has screw connection holes to be screw-connected with the horizontal adjustment unit, and
wherein the horizontal adjustment unit has adjustment holes each of which is shaped to correspond to movement trajectory of the screw connection holes which results from relative rotation between the horizontal adjustment unit and the fixed case.

14. The in-wall display device of claim 6, wherein the driving unit comprises:
a first motor which is provided on the first rotating unit to be adjacent to the first bracket and is shaft-coupled with a first driving gear;
a first fixed gear which is provided at a center of rotation of the first bracket and is engaged with the first driving gear;
a second motor which is provided on the first rotating unit to be adjacent to the second rotating unit and is shaft-coupled with a second driving gear;
a second fixed gear which is provided at a center of rotation of the second rotating unit and is engaged with the second driving gear;
a third motor which is provided on the second rotating unit to be adjacent to the second bracket and is shaft-coupled with a third driving gear; and
a third fixed gear which is provided at a center of rotation of the second bracket and is engaged with the third driving gear.

15. The in-wall display device of any one of claims 6 to 14, further comprising a storage unit,
wherein the controller further comprises a displacement information processing unit to acquire displacement information of each of the driving units that is controlled by the driving control unit and to store the displacement information in the storage unit, and
wherein the driving control unit refers to the displacement information stored in the storage unit to control each of the driving units based on driving instructions.

16. The in-wall display device of claim 1,
wherein the main body comprises:
an input unit which is provided on an outer side of the main body and has a plurality of input buttons; and
a television receiving unit which includes a television tuner unit separating broadcast data into video and audio data and outputting the video and audio data, a video processing unit demodulating the video data, and an audio output unit demodulating the audio data, and
wherein the display unit comprises:
a video driving circuit unit which receives video signals from the video processing unit and converts the video signals to video data;
a panel which receives the video data from the video driving circuit unit and displays images; and
a speaker which receives audio signals from the audio output unit and outputs the audio signals.

17. The in-wall display device of claim 16, wherein the main body further comprises:
a microphone which converts voice to electrical audio signals;
an interphone processing unit which outputs video and audio signals from information about visitors received from an interphone, and outputs audio signals outputted from the microphone 231 to the interphone;
a video selection unit which outputs one of video signals outputted from the television tuner unit and the interphone processing unit to the video driving circuit unit; and
an audio selection unit which outputs one of audio signals outputted from the television tuner unit and the interphone processing unit to an audio output unit.

18. The in-wall display device of claim 16, wherein the main body further comprises:
a microphone which converts voice to electrical audio signals; and
a telephone circuit unit which outputs audio signals received through a telephone line to an audio selection unit and transmits audio signals outputted from the microphone through the telephone line.

19. The in-wall display device of claim 16, wherein the main body further comprises a home automation interface which is connected to a computer for controlling home automation to transmit and receive instructions of devices installed in houses.
